# EUROPEAN PATENT APPLICATION

(11) **EP 3 534 502 A1**
(43) Date of publication of application: **04.09.2019**
(21) Application number: 17865094.1
(22) Date of filing: 24.10.2017
(51) Int. Cl.: H02K 5/00, F16H 25/20, F16H 25/22, H02K 5/22, H02K 7/06

(54) **ELECTRIC ACTUATOR**

(30) Priority: 31.10.2016 JP 2016213149
(71) Applicant: NTN Corporation, Osaka-shi, Osaka 550-0003 (JP)
(72) Inventor: SHIMIZU Tatsunori, Iwata-shi Shizuoka 438-8510 (JP)
(74) Representative: Grünecker Patent- und Rechtsanwälte PartG mbB
(86) International application number: PCT/JP2017/038374
(87) International publication number: WO 2018/079555

(57) **Abstract**

Provided is an electric actuator, including: a driving motor (2); a motion conversion mechanism (6) configured to convert a rotary motion of the driving motor (2) to a linear motion; and a motor case (8) configured to accommodate the driving motor (2), wherein the motor case (8) includes: a motor-case main body (69) configured to accommodate the driving motor (2) ; and a cap member (32) formed independently of the motor-case main body (69), and mounted to the motor-case main body (69), and wherein the cap member (32) includes: an insertion hole (32a) configured to insert an electrode (33) connected to the driving motor (2); and a connector part (32b) configured to connect a mating connector on which a mating terminal configured to be connected to the electrode (33) is provided.

## Description

### Technical Field

The present invention relates to an electric actuator.

### Background Art

In recent years, electrification of vehicles and the like has been promoted for power saving and reduction in fuel consumption. For example, a system for operating an automatic transmission, abrake, a steering wheel, and the like of the automobile with use of power of an electric motor has been developed and brought to the market. As an electric actuator for use in such an application, there has been known an electric linear actuator configured to convert a rotary motion of a motor into a motion in a linear direction.

In general, the electric actuator comprises a case configured to accommodate a motor, drive components, and the like. The case comprises a connector part configured to connect a connector, which is connected to an external power supply or a control device, and electrodes, which are provided on the motor, with each other (see Patent Literature 1).

### Citation List

Patent Literature 1: JP 2013-204697 A

### Summary of Invention

### Technical Problem

However, in a case in which the connector part is formed integrally with the case, when a shape of a mating connector is changed, the connector part needs to be changed together with the case. Therefore, there is such a problem that the cost increases for series production and multiple-type deployment of the electric actuator.

Therefore, the present invention has an object to provide an electric actuator preferred for the reduction in cost and the series production.

### Solution to Problem

As a technical measure to attain the above-mentioned object, according to one embodiment of the present invention, there is provided an electric actuator, comprising: a driving motor; a motion conversion mechanism configured to convert a rotary motion of the driving motor to a linear motion; and a motor case configured to accommodate the driving motor, wherein the motor case comprises: a motor-case main body configured to accommodate the driving motor; and a cap member formed independently of the motor-case main body, and mounted to the motor-case main body, and wherein the cap member comprises: an insertion hole configured to insert an electrode connected to the driving motor; and a connector part configured to connect a mating connector on which a mating terminal configured to be connected to the electrode is provided.

As described above, the cap member comprising the connector part is formed independently of the motor-case main body. Therefore, even when the shape of a mating connector is changed, this change can be addressed by only changing the cap member. That is, necessity of changing the entire motor case can be eliminated by only changing the cap member to a cap member comprising the connector part adapted to the shape of the mating connector. Therefore, a cost for the adaptation caused by the change in the mating connector can be reduced.

With a configuration in which a mounting direction of the cap member with respect to the motor-case main body and an insertion direction of the electrode with respect to the insertion hole are oriented in the same direction, when the cap member is to be mounted to the motor-case main body, the cap member can smoothly be mounted without interference with the electrode.

Moreover, for a configuration comprising an actuator case, to which the motor-case main body is mounted, and which is configured to support the motion conversion mechanism, it is preferred that a mounting direction of the motor-case main body with respect to the actuator case and the insertion direction of the electrode with respect to the insertion hole be oriented in the same direction. With this configuration, when the motor-case main body is to be mounted to the actuator case under a state in which the cap member is mounted to the motor-case main body, a mounting operation can smoothly be performed without interference with the electrode.

The motion conversionmechanismmay comprise a ball screw arranged on an axis parallel with an output shaft of the driving motor.

### Advantageous Effects of Invention

According to the present invention, even when the shape of the mating connector is changed, this change can be addressed by changing only the cap member. Therefore, the series production and the multiple-type deployment of the electric actuator can be achieved at a low cost.

### Brief Description of Drawings

FIG. 1 is a vertical sectional view of an electric actuator according to one embodiment of the present invention.
FIG. 2 is an exploded perspective view of the electric actuator.
FIG. 3 is a view of a planetary-gear speed reduction mechanism as seen in an axial direction.
FIG. 4 is a control block diagram of the electric actuator.
FIG. 5 is a control block diagram of the electric actuator.
FIG. 6 is a sectional view of a cap member and a peripheral portion thereof.
FIG. 7 is a perspective view for illustrating a state in which a mating connector is connected to a connector part.
FIG. 8 is a perspective view for illustrating a method of mounting a driving motor and a stay.
FIG. 9 is a transverse sectional view as seen in a direction indicated by the arrows of the line A-A in FIG. 1.
FIG. 10 is a vertical sectional view of the electric actuator according to another embodiment of the present invention.
FIG. 11 is an exploded perspective view of the electric actuator according to the another embodiment.

### Description of Embodiments

Now, description is made of the present invention with reference to the accompanying drawings. In the respective drawings for illustrating the present invention, components such as members and component parts having the same functions or shapes are denoted by the same reference symbols as long as the components can be distinguished, and description thereof is therefore omitted after the description is made once.

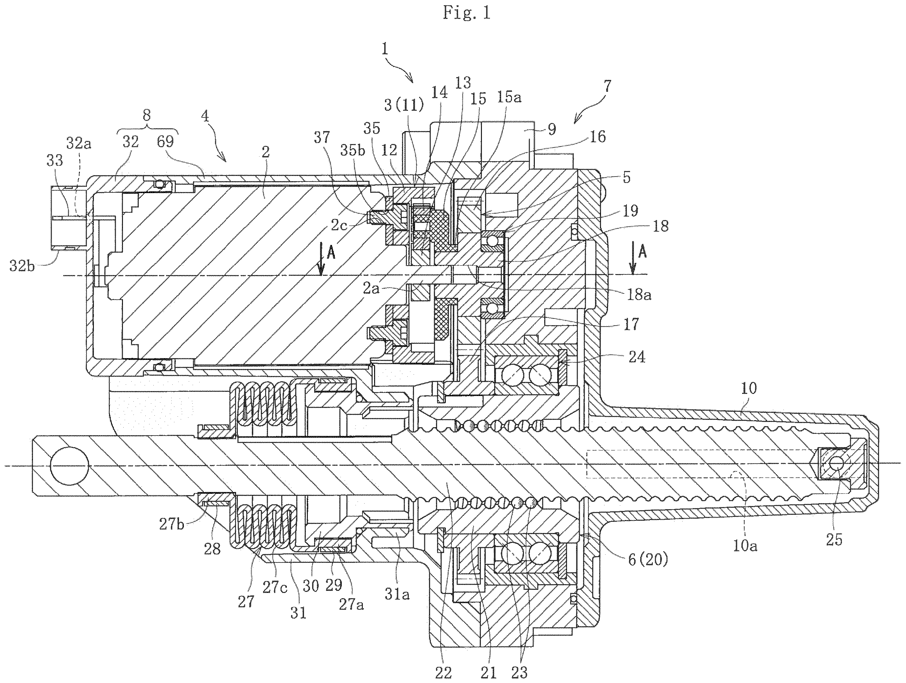

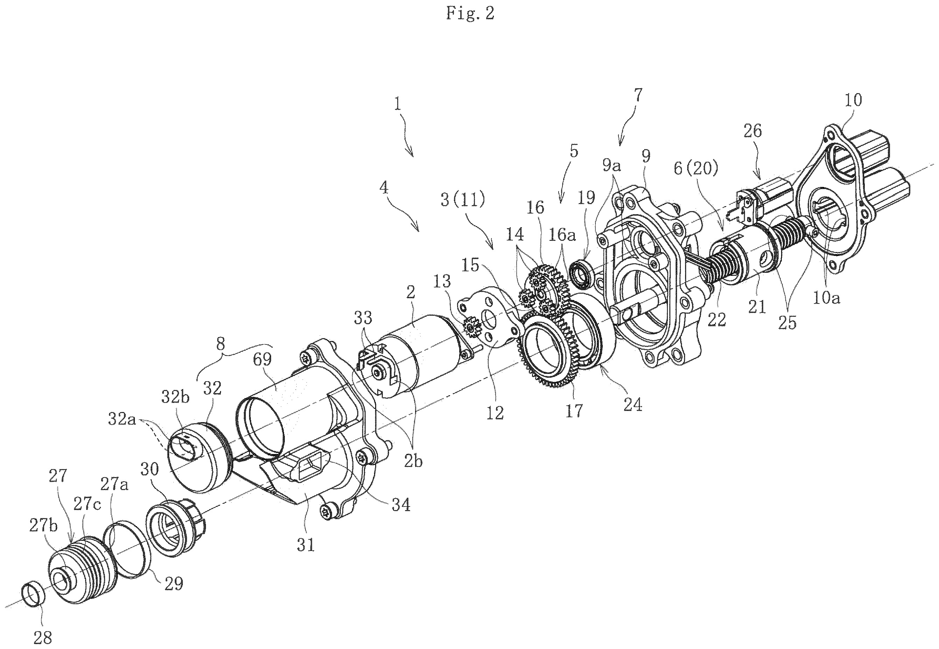

FIG. 1 is a vertical sectional view of an electric actuator according to one embodiment of the present invention. FIG. 2 is an exploded perspective view of the electric actuator.

As illustrated in FIG. 1 and FIG. 2, the electric actuator 1 according to this embodiment mainly comprises a motor section 4 and a drive transmission/conversion section 7. The motor section 4 comprises a driving motor 2 and a speed reduction mechanism 3. The drive transmission/conversion section 7 comprises a transmission gear mechanism 5 and a motion conversion mechanism 6. As described later, it is not always required that the motor section 4 comprise the speed reduction mechanism 3.

The sections forming the electric actuator 1 comprise respective exterior cases. Components are accommodated or supported in the respective exterior cases. Specifically, the motor section 4 comprises a motor case 8 configured to accommodate the driving motor 2 and the speed reduction mechanism 3. The drive transmission/conversion section 7 comprises an actuator case 9 configured to support the transmission gear mechanism 5 and the motion conversion mechanism 6. Moreover, the motor case 8 comprises a motor-case main body 69 and a cap member 32. The motor-case main body 69 is configured to accommodate the driving motor 2. The cap member 32 is formed independently of the motor-case main body 69. The motor-case main body 69 is mounted to the actuator case 9 so as to be coupled and decoupled in an axial direction of the driving motor 2. The driving motor 2 and the speed reduction mechanism 3 are also mounted to the actuator case 9 so as to be coupled and decoupled in the axial direction. Further, a shaft case 10 configured to accommodate a part of the motion conversion mechanism 6 is mounted to the actuator case 9 on an opposite side of a motor case 8 side so as to be coupled and decoupled in the axial direction. These exterior cases are assembled to one another through fastening with bolts. Now, description is made of detailed configurations of the respective parts forming the electric actuator 1.

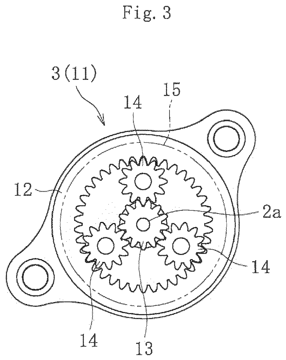

FIG. 3 is a view of the speed reduction mechanism as seen in the axial direction.

The speed reduction mechanism 3 comprises a planetary-gear speed reduction mechanism 11 formed of a plurality of gears and the like. As illustrated in FIG. 3, the planetary-gear speed reduction mechanism 11 is formed of a ring gear 12, a sun gear 13, a plurality of planetary gears 14, and a planetary gear carrier 15.

The sun gear 13 is arranged at the center of the ring gear 12. An output shaft 2a of the driving motor 2 is press-fitted to the sun gear 13. Moreover, the respective planetary gears 14 are arranged between the ring gear 12 and the sun gear 13 so as to mesh with the ring gear 12 and the sun gear 13. The respective planetary gears 14 are rotatably held by the planetary gear carrier 15.

In the planetary-gear speed reduction mechanism 11, when the driving motor 2 performs the rotational drive, the sun gear 13 coupled to the output shaft 2a of the driving motor 2 rotates, and, along with this rotation, the respective planetary gears 14 revolve along the ring gear 12 while rotating. Then, the planetary gear carrier 15 is rotated by the revolution motion of the planetary gears 14. With this, the speed of the rotation of the driving motor 2 is reduced, the rotation reduced in speed is transmitted, and a rotation torque increases. Through the transmission of the driving force via the planetary-gear speed reduction mechanism 11 in such a manner, a high output of the electric actuator 1 is thus obtained, and downsizing of the driving motor 2 can thus be achieved. In this embodiment, although an inexpensive (brush) DC motor is used as the driving motor 2, other motor such as a brushless motor may be used.

Next, as illustrated in FIG. 1 and FIG. 2, the transmission gear mechanism 5 is formed of a drive gear 16 and a driven gear 17. The drive gear 16 has a small diameter, and serves as a first gear with a rotation shaft arranged coaxially with the output shaft 2a of the driving motor 2. The driven gear 17 has a large diameter, and serves as a second gear which meshes with the drive gear 16. A gear boss 18 (see FIG. 1) serving as a rotation shaft is press-fitted to a rotation center portion of the drive gear 16. One end portion (right end portion in FIG. 1) of the gear boss 18 is rotatably supported by a rolling bearing 19 mounted to the actuator case 9. The drive gear 16 and the gear boss 18 may be integrally formed through sintering. Meanwhile, an end portion (left end portion in FIG. 1) of the gear boss on an opposite side is supported through insertion of the output shaft 2a of the driving motor 2 into a shaft hole 18a opened on a side of this end portion. That is, the output shaft 2a of the driving motor 2 is inserted into the gear boss 18 so as to constitute a relationship of a slide bearing rotatable relatively to the gear boss 18.

The gear boss 18 is so coupled to the planetary gear carrier 15 as to integrally rotate. In detail, the planetary gear carrier 15 has a cylindrical portion 15a (see FIG. 1) at a center portion thereof, and the cylindrical portion 15a is press-fitted over an outer peripheral surface of the gear boss 18. The planetary gear carrier 15 may be made of resin, and the gear boss 18 may be molded integrally with the planetary gear carrier 15 by insert molding . As a result, when the driving motor 2 performs rotational drive, and the planetary gear carrier 15 rotates accordingly, the drive gear 16 rotates integrally with the planetary gear carrier 15, and the driven gear 17 thus rotates. This embodiment is so configured that the rotation is reduced in speed (increased in torque) from the drive gear 16 having a small diameter to the driven gear 17 having a large diameter, but the rotation may be transmitted at a constant speed from the drive gear 16 to the driven gear 17.

Now, description is made of the motion conversion mechanism.

The motion conversion mechanism 6 is formed of a ball screw 20 arranged on an axis parallel with the output shaft 2a of the driving motor 2. The motion conversion mechanism 6 is not limited to the ball screw 20, and may be a lead screw device. However, in terms of reducing the rotation torque and downsizing the driving motor 2, the ball screw 20 is more preferred.

The ball screw 20 comprises a ball screw nut 21, a ball screw shaft 22, a large number of balls 23, and a circulation member (not shown) . Spiral grooves are formed in each of an inner peripheral surface of the ball screw nut 21 and an outer peripheral surface of the ball screw shaft 22. Two rows of the balls 23 are received between both of the spiral grooves.

The ball screw nut 21 is rotatably supported by the double-row bearing 24 mounted to the actuator case 9. The double-row bearing 24 is fixed through press-fit on a rear end side (right side of FIG. 1) of the ball screw shaft 22 with respect to a portion on the outer peripheral surface of the ball screw nut 21 to which the driven gear 17 is fixed. Meanwhile, a rotation of the ball screw shaft 22 is restricted through insertion of a pin 25 serving as a rotation restriction member provided on a rear end portion (right end portion in FIG. 1) of the ball screw shaft 22 into guide grooves 10a in an axial direction formed in an inner peripheral surface of the shaft case 10.

When the ball screw nut 21 rotates, the plurality of balls 23 accordingly circulate through the circulation member while moving along the spiral grooves, and the ball screw shaft 22 advances/retreats along the guide grooves 10a of the shaft case 10. The rotary motion from the driving motor 2 is converted to a linear motion in the axial direction parallel with the output shaft 2a of the driving motor 2 through the advance/retreat of the ball screw shaft 22 in such a manner. A distal end portion (left end portion in FIG. 1) of the ball screw shaft 22 in the advance direction functions as an operation part (actuator head) configured to operate a device of an object to be operated. FIG. 1 is a view for illustrating a state in which the ball screw shaft 22 is arranged at an initial position when the ball screw shaft 22 retreats most toward the right side in FIG. 1.

Moreover, the electric actuator 1 according to this embodiment comprises a lock mechanism 26 (see FIG. 2) configured to prevent an unintended advance/retreat of the ball screw shaft 22. The lock mechanism 26 is mounted to the shaft case 10, and is configured to be capable of engaging with/disengaging from a plurality of engagement holes 16a (see FIG. 2) formed over the drive gear 16 in a circumferential direction. Even when an external force is input from a side of the object to be operated to a side of the ball screw shaft 22, an unintended advance/retreat of the ball screw shaft 22 is prevented, and a position of the ball screw shaft 22 in an advance/retreat direction can be maintained at a predetermined position by the lock mechanism 26 engaging with one of the engagement holes 16a, to thereby restrict the rotation of the drive gear 16. The configuration comprising such a lockmechanism 26 is particularly preferred for a case in which the electric actuator is applied to an application that requires maintenance of a position.

A boot 27 configured to prevent entry of foreign substances into the ball screw nut 21 is mounted on a distal end portion side of the ball screw shaft 22. The boot 27 is formed of a large-diameter end portion 27a, a small-diameter end portion 27b, and a bellows 27c. The bellows 27c is configured to connect the large-diameter end portion 27a and the small-diameter end portion 27b to each other, and extend/contract in the axial direction. The small-diameter end portion 27b is fixed to an outer peripheral surface of the ball screw shaft 22 through tightening a boot band 28. The large-diameter end portion 27a of the boot 27 is fixed to an outer peripheral surface of a boot mounting member 30 having a cylindrical shape mounted to the motor-case main body 69 through tightening a boot band 29.

Moreover, a boot cover 31 having a cylindrical shape configured to protect the boot 27 is provided on an outer side of the boot 27. A cylindrical mounting part 31a (see FIG. 1) is provided on an inner side of the boot cover 31. The boot mounting member 30 is mounted to the mounting part 31a. Both the boot cover 31 and the mounting part 31a are provided integrally with the motor-case main body 69.

Moreover, the cap member 32 is mounted to the motor-case main body 69 on an opposite side of an actuator case 9 side. An insertion hole 32a (see FIG. 2) configured to insert a bus bar 33 configured to supply power from a power source (not shown) to the driving motor 2 is formed in the cap member 32. Further, a sensor case 34 (see FIG. 2) configured to accommodate a stroke sensor configured to detect a stroke of the ball screw shaft 22 is provided integrally on the outer peripheral surface of the motor-case main body 69.

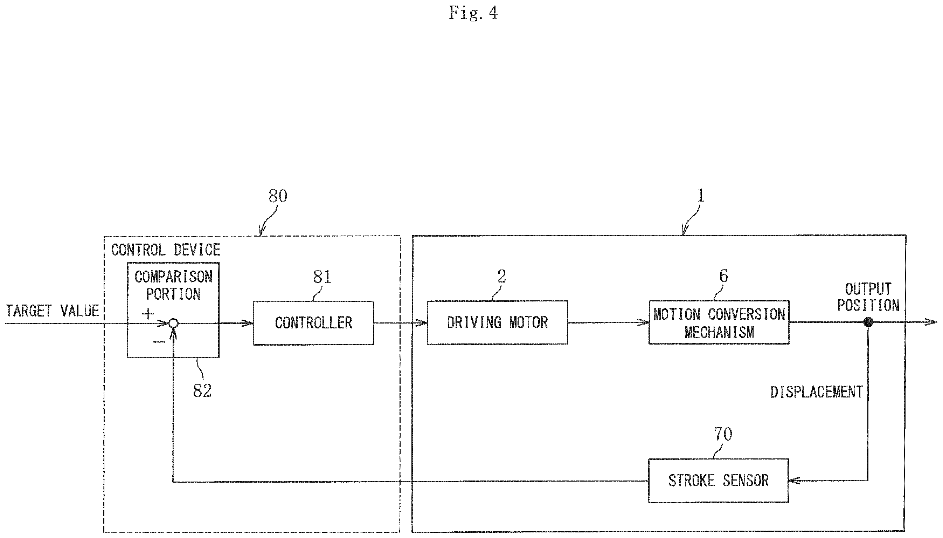

Next, with reference to FIG. 4, description is made of feedback control for the electric actuator using the stroke sensor.

As illustrated in FIG. 4, when a target value is transmitted to a control device 80, a control signal is transmitted from a controller 81 of the control device 80 to the driving motor 2. The target value is, for example, a stroke value calculated by an ECU provided at an upper position of a vehicle based on an operation amount when the operation amount is input to the ECU.

When the driving motor 2 receives the control signal, the driving motor 2 starts the rotational drive, and the driving force thereof is transmitted to the ball screw shaft 22 through intermediation of the planetary-gear speed reduction mechanism 11, the drive gear 16, the driven gear 17, and the ball screw nut 21, and the ball screw shaft 22 thus advances. With this, the object device to be operated arranged on the distal end portion side (actuator head side) of the ball screw shaft 22 is operated.

At this time, the stroke value (position in the axial direction) of the ball screw shaft 22 is detected by the stroke sensor 70. The detection value detected by the stroke sensor 70 is transmitted to a comparison portion 82 of the control device 80, and a difference between the detection value and the target value is calculated. Then, the driving motor 2 is driven until the detection value matches the target value. When the electric actuator 1 of this embodiment is applied to, for example, a shift-by-wire system, a shift position can reliably be controlled by feeding back the stroke value detected by the stroke sensor 70 to control the position of the ball screw shaft 22 in such a manner.

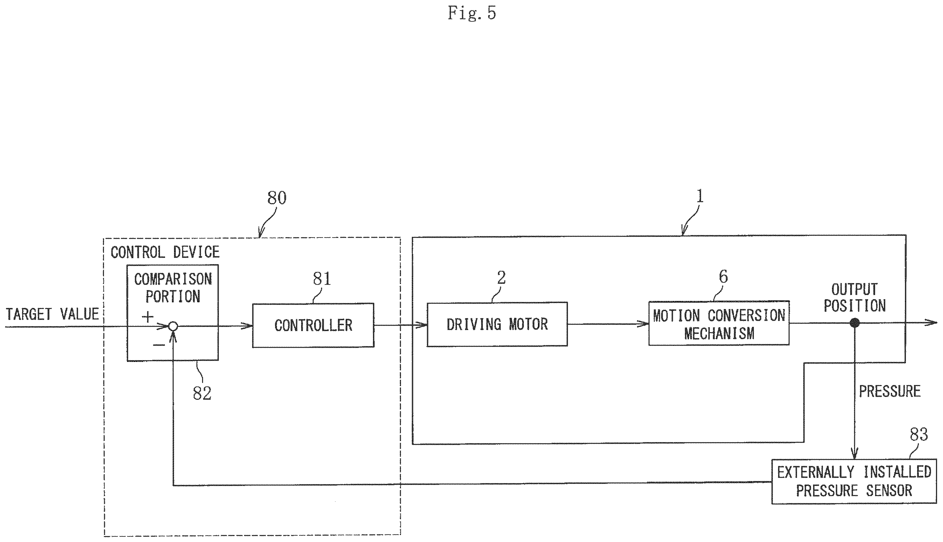

Next, with reference to FIG. 5, description is made of feedback control in a case in which a pressure sensor 83 is used in place of the stroke sensor 70.

As illustrated in FIG. 5, in this case, the pressure sensor 83 is provided for the object device to be operated. When the operation amount is input to the ECU provided at the upper position of the vehicle, the ECU calculates a required target value (pressure command value) . When the target value is transmitted to the control device 80, and the control signal is transmitted from the controller 81 to the driving motor 2, the driving motor 2 starts the rotational drive. With this, the ball screw shaft 22 advances, and the object device to be operated arranged on the distal end portion side (actuator head side) of the ball screw shaft 22 is operated to pressurize.

An operation pressure of the ball screw shaft 22 at this time is detected by the pressure sensor 83, and the position of the ball screw shaft 22 is subjected to the feedback control based on the detection value and the target value as in the case of the use of the stroke sensor 70. When the electric actuator 1 of this embodiment is applied to, for example, a brake-by-wire system, a hydraulic pressure of a brake can reliably be controlled by feeding back the pressure value detected by the pressure sensor 83 to control the position of the ball screw shaft 22 in such a manner.

The overall configuration and the operation of the electric actuator 1 according to this embodiment are as described above . Now, description is made of the cap member 32 and a peripheral portion thereof relating to the electric actuator 1 of this embodiment.

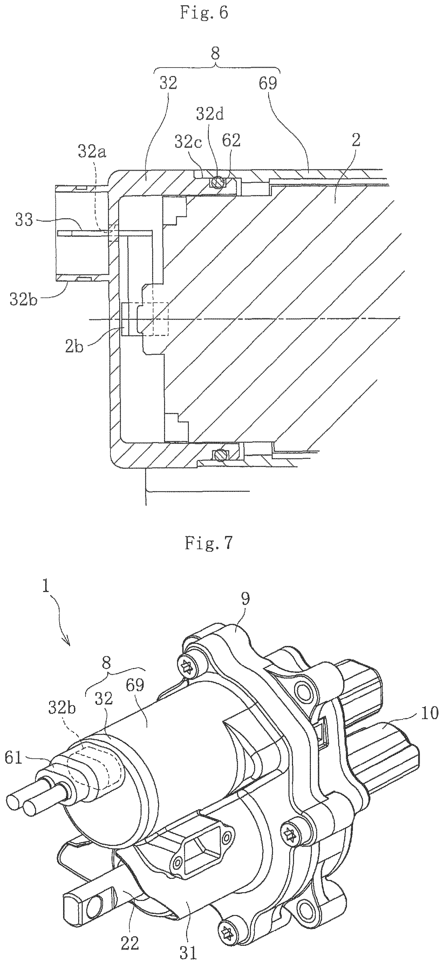

FIG. 6 is a sectional view of the cap member 32 and a peripheral portion thereof.

As illustrated in FIG. 6, the cap member 32 is a cylindrical member, which is opened in one end portion (right end portion in FIG. 6) in the axial direction, and is closed in another end portion (left end portion in FIG. 6) . The end portion on the open side of the cap member 32 is formed into a fitting part 32c configured to be inserted into and fitted to the motor-case main body 69. Amounting groove 32d to which an O-ring 62 serving as a seal member is mounted is formed continuously in a circumferential direction in an outer circumferential surface of the fitting part 32c. Meanwhile, the insertion holes 32a configured to insert the bus bars 33 are formed in an end surface on the closed side of the cap member 32. Moreover, a connector part 32b to which a mating connector is connected is integrally formed around a portion in which the insertion holes 32a are formed, and protrudes from an external surface of the cap member 32 in the axial direction of the driving motor 2.

FIG. 7 is a perspective view for illustrating a state in which the mating connector 61 is connected to the connector part 32b.

As illustrated in FIG. 7, mating terminals, not shown, provided inside the mating connector 61 are connected to the bus bars 33 by fitting the mating connector 61 to an outer circumferential surface of the connector part 32b. As a result, a power supply and the driving motor 2 are electrically connected to each other, and a state in which power can be supplied from the power supply to the driving motor 2 is brought about.

Each of the bus bars 33 serving as an electrode is formed through bending a metal member in a belt form into a predetermined shape (see FIG. 2). One end portion of the bus bar 33 is connected to a motor terminal 2b provided on an opposite side of the side on which the output shaft 2a of the drivingmotor 2 protrudes . Another end portion of the bus bar 33 is inserted into the insertion hole 32a of the cap member 32, and is arranged in the connector part 32b. The bus bar 33 and the motor terminal 2b is connected by means of fusing (thermal caulking), crimping, soldering, or the like.

Incidentally, in this embodiment, the connector part 32b is formed into a tubular shape having an ellipsoidal cross section (see FIG. 2), but the shape of the connector part 32b is appropriately changed in accordance with a shape of the mating connector 61. The shape of the connector part 32b needs to be changed in accordance with the shape of the mating connector 61 in such a manner, but the cap member 32 comprising the connector part 32b is formed independently of the motor-case main body 69 in the electric actuator 1 according to this embodiment. Therefore, even when the shape of the mating connector 61 is changed, the change can be addressed by changing only the cap member 32. That is, necessity of changing the entire motor case 8 can be eliminated by changing only the cap member 32 to a cap member comprising the connector part 32b adapted to the shape of the mating connector 61, and a cost for the adaptation caused by the change in the mating connector 61 can thus be reduced. As a result, series production and multiple-type deployment of the electric actuator can be achieved at a low cost. When a shape and an arrangement of mating terminals provided in the mating connector 61 are also changed as a result of the change in shape of the mating connector 61, a shape and an arrangement of the bus bars 33 only need to be changed accordingly.

The cap member 32 is mounted to the motor-case main body 69 by first mounting the O-ring 62 in the mounting groove 32d of the cap member 32, and then inserting the fitting part 32c of the cap member 32 into an end portion of the motor-case main body 69 in the axial direction, to thereby fit the fitting part 32c and the motor-case main body 69 to each other. Further, the cap member 32 is joined to the motor-case main body 69 through welding or the like so as to prevent the cap member 32 from being detached. Alternatively, in place of the welding, an engagement part having a so-called snap-fit structure that uses elastic deformation may be formed in the fitting member 32c of the cap member 32, and the cap member 32 may be engaged with the motor-case main body 69 through this engagement part.

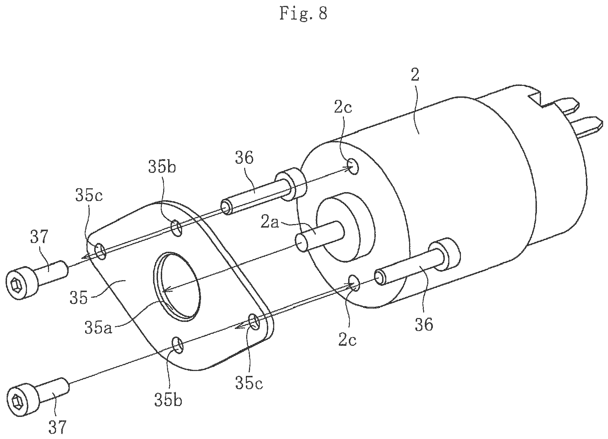

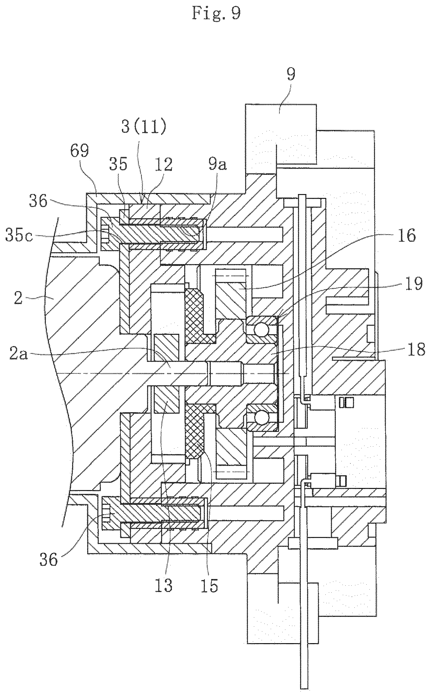

The motor-case main body 69 to which the cap member 32 is mounted is mounted to the actuator case 9 by mounting the driving motor 2 to the actuator case 9 before the motor-case main body 69 is mounted. As illustrated in FIG. 8, the driving motor 2 is mounted to the actuator case 9 by, first, inserting the output shaft 2a of the driving motor 2 into a hole portion 35a formed at a center of a stay 35 in a plate shape, then inserting two bolts 37 through bolt insertion holes 35b of the stay 35, and threadedly engaging the two bolts 37 with threaded holes 2c formed in the driving motor 2. As a result, the stay 35 is integrally fixed to the driving motor 2. Then, other two bolts 36 are inserted through other bolt insertion holes 35c formed in the stay 35 from an opposite side of the bolts 37, and are threadedly engaged with threaded holes 9a (see FIG. 2) formed in the actuator case 9. As a result, the stay 35 is fastened to the actuator case 9 through As a result, the driving motor 2 is fastened to the actuator case 9, and the driving motor 2 is thus mounted to the actuator case 9. The state in which the stay 35 is fastened to the actuator case 9 with the bolts 36 is illustrated in FIG. 9, which is a transverse sectional view as seen in a direction indicated by the arrows of the line A-A in FIG. 1. Moreover, on this occasion, the planetary-gear speed reduction mechanism 11 is mounted together with the driving motor 2 to the actuator case 9 by simultaneously fastening the ring gear 12 of the planetary-gear speed reduction mechanism 11 through use of the bolts 36 configured to fasten the driving motor 2 (see FIG. 9).

As described above, after the driving motor 2 is mounted to the actuator case 9, and, then, the bus bars 33 are mounted to the driving motor 2 (the bus bars 33 may first be mounted to the driving motor 2, and, then, the driving motor 2 may be mounted to the actuator case 9), the motor-case main body 69 to which the cap member 32 is mounted is mounted to the actuator case 9. On this occasion, distal end portions of the bus bars 33 (end portions to be connected to the mating connector) pass relatively through the insertion holes 32a of the cap member 32, and come to be exposed to the outside by moving the motor-case main body 69 in the axial direction so as to cover the driving motor 2. In the electric actuator 1 according to this embodiment, the direction of mounting the motor-case main body 69 to the actuator case 9 and the direction of inserting the bus bars 33 into the insertion holes 32a are oriented in the same direction as described above, and the mounting operation can thus smoothly be performed without interference with the bus bars 33. Then, the end portion of the motor-case main body 69 is fitted to the actuator case 9, and the motor-case main body 69 is then fastened to the actuator case 9 with bolts so as to be fixed to the actuator case 9.

Moreover, the motor-case main body 69 may be mounted to the actuator case 9 under a state in which the cap member 32 is not mounted to the motor-case main body 69, which is different from the above-mentioned assembly procedure. In this case, after the driving motor 2 and the motor-case main body 69 are mounted in this order to the actuator case 9, the cap member 32 is mounted to the motor-case main body 69. On this occasion, as the cap member 32 is being mounted to the motor-case main body 69 in the axial direction, the distal end portions of the bus bars 33 pass relatively through the insertion holes 32a of the cap member 32, and come to be exposed to the outside. In the electric actuator 1 according to this embodiment, the direction of mounting the cap member 32 to the motor-case main body 69 and the direction of inserting the bus bars 33 into the insertion holes 32a are also the same as described above. Therefore, also when the cap member 32 is mounted after the motor-case main body 69 is mounted, the mounting operation can smoothly be performed without interference with the bus bars 33.

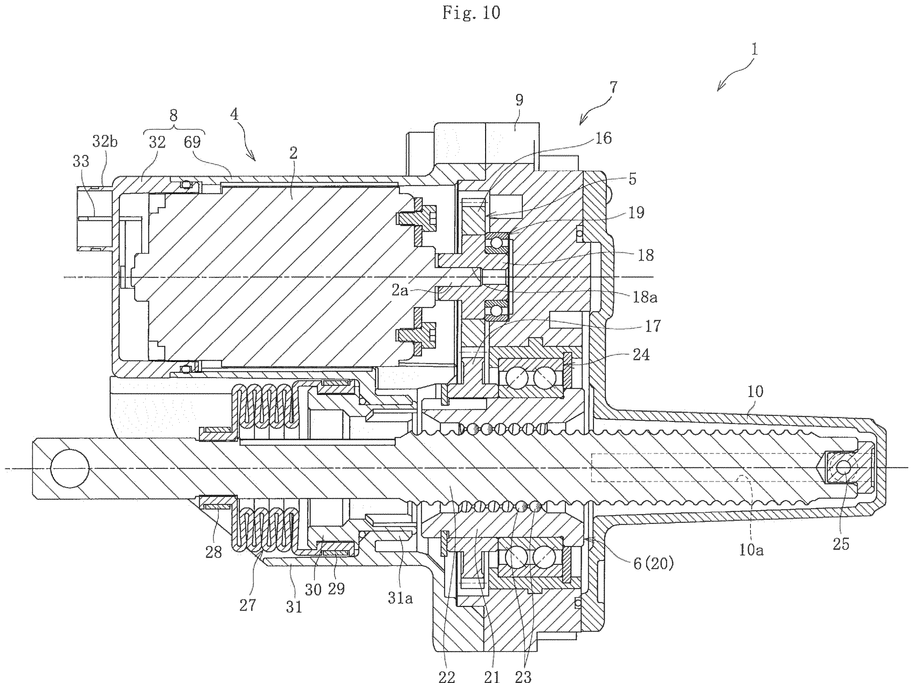

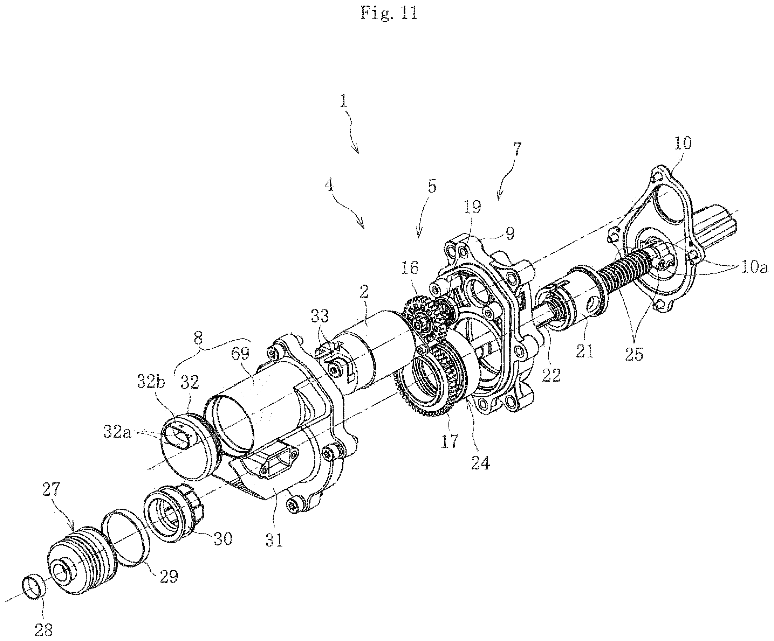

FIG. 10 is a vertical sectional view of the electric actuator according to another embodiment of the present invention. FIG. 11 is an exploded perspective view of the electric actuator according to the another embodiment.

The electric actuator illustrated in FIG. 10 and FIG. 11 does not comprise the planetary-gear speed reduction mechanism 11 and the lock mechanism 26 provided for the electric actuator illustrated in FIG. 1 to FIG. 9. Therefore, the length of the motor case 8 (motor-case main body 69) is reduced a little in the axial direction, and the shaft case 10 has a shape without a portion configured to accommodate the lockmechanism26. Moreover, inthiscase, the output shaft 2a of the driving motor 2 is coupled through press-fit to the shaft hole 18a of the gear boss 18, the driving force of the driving motor 2 is directly transmitted to the drive gear 16 (without intermediation of the planetary-gear speed reduction mechanism 11), and is transmitted from the drive gear 16 to the ball screw 20 through the driven gear 17.

In such a manner, the electric actuator adapted to other applications and specifications can be formed by only omitting the planetary-gear speed reduction mechanism 11 and the lock mechanism 26 and replacing the motor case 8 (motor-case main body 69) and the shaft case 10 with other cases, without changing many common parts. Thus, with the configuration of the electric actuator according to this embodiment, an electric actuator which is low in cost and excellent in versatility can be provided also for deployment as multiple types to an electric parking brake mechanism for vehicles including two-wheeled vehicles, an electric/hydraulic brake mechanism, an electric shift change mechanism, and an electric power steering as well as a 2WD/4WD electric switching mechanism and an electric shift change mechanism for an outboard engine (for a vessel propulsion engine), and the like.

The electric actuator according to the another embodiment is configured as in the embodiment illustrated in FIG. 1 to FIG. 9 in points other than those described above. Thus, in the electric actuator according to the another embodiment as well as the embodiment illustrated in FIG. 1 to FIG. 9, the cap member 32 comprising the connector part 32b is formed independently of the motor-case main body 69. Thus, even when the shape of the mating connector is changed, the change can be addressed by changing only the cap member 32. Therefore, the series production and the multiple-type deployment of the electric actuator can be achieved at a low cost.

Moreover, also in the another embodiment, the direction of mounting the cap member 32 to the motor-case main body 69 and the direction of inserting the bus bars 33 into the insertion holes 32a are oriented in the same direction, and the cap member 32 can thus smoothly be mounted without the interference with the bus bars 33 after the motor-case main body 69 is mounted. Further, the direction of mounting the motor-case main body 69 to the actuator case 9 and the direction of inserting the bus bars 33 into the insertion holes 32a are also oriented in the same direction. Therefore, also when the motor-case main body 69 is mounted under the state in which the cap member 32 is mounted, the mounting operation can be performed smoothly without interference with the bus bars 33.

Description is made of the embodiments of the present invention. However, the present invention is not limited to the above-mentioned embodiments. As a matter of course, the present invention may be carried out in various modes without departing from the spirit of the present invention. In the above-mentioned embodiments, the cases in which the present invention is applied to the electric actuators configured to convert the rotary motion of the driving motor to the linear motion in the axial direction parallel with the output shaft of the driving motor are exemplified, but the present invention is not limited to this type of the electric actuators, and can be applied also to an electric actuator configured to convert the rotary motion of the driving motor to a linear motion coaxial with the output shaft of the driving motor. Moreover, in the above-mentioned embodiments, the case in which the present invention is applied to the electric actuators each comprising the connector part configured to supply the current from the power supply to the driving motor is exemplified. However, the present invention is not limited to this example, and can similarly be applied to an electric actuator comprising a connector part configured to input control signals from a control device to the driving motor.

### Reference Signs List

- 1: electric actuator
- 2: driving motor
- 6: motion conversion mechanism
- 8: motor case
- 9: actuator case
- 20: ball screw
- 32: cap member
- 32a: insertion hole
- 32b: connector part
- 61: mating connector
- 69: motor-case main body

## Claims

1. An electric actuator, comprising:
a driving motor;
a motion conversion mechanism configured to convert a rotary motion of the driving motor to a linear motion; and
a motor case configured to accommodate the driving motor,
wherein the motor case comprises:
a motor-case main body configured to accommodate the driving motor; and
a cap member formed independently of the motor-case main body, and mounted to the motor-case main body, and
wherein the cap member comprises:
an insertion hole configured to insert an electrode connected to the driving motor; and
a connector part configured to connect amating connector on which a mating terminal configured to be connected to the electrode is provided.

2. The electric actuator according to claim 1, wherein a mounting direction of the cap member with respect to the motor-case main body and an insertion direction of the electrode with respect to the insertion hole are oriented in the same direction.

3. The electric actuator according to claim 1 or 2, further comprising an actuator case, to which the motor-case main body is mounted, and which is configured to support the motion conversion mechanism,
wherein a mounting direction of the motor-case main body with respect to the actuator case and an insertion direction of the electrode with respect to the insertion hole are oriented in the same direction.

4. The electric actuator according to any one of claims 1 to 3, wherein the motion conversion mechanism comprises a ball screw arranged on an axis parallel with an output shaft of the driving motor.
